# EUROPÄISCHE PATENTSCHRIFT

(11) **EP 2 696 219 B1**
(45) Veröffentlichungstag und Bekanntmachung des Hinweises auf die Patenterteilung: **04.01.2017**
(21) Anmeldenummer: 12401164.4
(22) Anmeldetag: 06.08.2012
(51) Int. Cl.: G01V 3/12, G01D 11/30

(54) **Vorsatzeinrichtung zur Verbesserung der Empfangsqualität einer Material-Detektoreinrichtung**
Header device for improving the reception quality of a material detector device
Dispositif de montage destiné à l'amélioration de la qualité de réception d'un dispositif de détection de matériau

(43) Veröffentlichungstag der Anmeldung: 12.02.2014
(73) Patentinhaber: Ampass-Explorer Corp., Tortola (VG)
(72) Erfinder: Stauber, Siegfried, 8051 Zürich (CH)
(74) Vertreter: Klocke, Peter

(56) Entgegenhaltungen:
- EP-A2- 0 984 460
- WO-A1-2007/064271
- CH-A5- 696 893
- DE-A1-102011 006 488
- US-A1- 2005 028 890

## Beschreibung

Die vorliegende Erfindung betrifft eine Vorsatzeinrichtung, die mit einer Material-Detektoreinrichtung mit einem Suchantenennen-Polarisationsinstrument, wobei die Material-Detektoreinrichtung ein Gehäuse mit einer einer Detektionsrichtung zugeordneten Antennenfläche aufweist, verbindbar ist.

Eine derartige Material-Detektoreinrichtung ist aus der CH 696 893 A5 bekannt. Diese Einrichtungen sind geeignet, gesuchte Objekte mittels einer auf das jeweilige Material abzustimmenden Antenne über größere Distanzen zu orten. Diese Material-Detektoreinrichtung weist üblicherweise ein Gehäuse auf, in dem ein entsprechendes Suchantennen-Polarisationsinstrument angeordnet ist. Das Gehäuse selbst weist eine Antennenfläche auf, durch die das für die Ortung des gesuchten Objekts erforderliche Signal ausgesandt und das Reflexionssignal empfangen wird. Ein derartiges Gehäuse ist in der CH 700 278 B1 offenbart.

In der Praxis hat sich nun gezeigt, dass die Messungen von Umwelteinflüssen auf das Signal stark beeinflusst werden.

Der vorliegenden Erfindung liegt daher die Aufgabe zugrunde, eine Möglichkeit vorzuschlagen, mit dem die Genauigkeit einer derartigen Material-Detektoreinrichtung verbessert werden kann.

Diese Aufgabe wird erfindungsgemäß mit den Merkmalen des Anspruchs 1 gelöst. Weitere vorteilhafte Ausgestaltungen sind den rückbezogenen Unteransprüchen zu entnehmen. Gemäss der Erfindung wird eine Vorsatzeinrichtung vorgesehen, die zwei mit gleichen Polen einander zugewandte Magnete aufweist, deren Polflächen von einer verzinnten Kupfer- oder oxidierten Aluminiumschicht abgedeckt sind, wobei die Magnete und die Kupfer- bzw. Aluminiumschicht mindestens eine Durchgangsbohrung aufweisen und die Magnete sich senkrecht zu der Antennenfläche erstreckend an dem Gehäuse der Material-Detektoreinrichtung anordenbar oder angeordnet sind und sich senkrecht zu der Antennenfläche erstrecken, so dass sich zwischen den Magneten ein vor der Antennenfläche befindlicher Magnetfeldraum bildet. Die Kupfer- oder Aluminiumschicht kann als eine Folie ausgebildet sein, wobei die Beschichtung Zinn bzw. Oxid im µ-Bereich liegen kann. Bekanntlich ergibt sich bei Aluminium nach der Lagerung an Luft eine dünnen spontane Aluminiumoxidschicht. Allerdings kann auch eine elektrolytisch aufgebrachte Aluminiumoxidschicht (eloxiertes Aluminium) verwendet werden. Beide Möglichkeiten werden unter dem Begriff "oxidiertes Aluminium" verstanden.

Überraschenderweise wurde festgestellt, dass durch eine derartig ausgestaltete Vorsatzeinrichtung die Empfangsqualität der Material-Detektoreinrichtung erheblich verbessert wird, indem Störeinflüsse auf den Messstrahl der Material-Detektoreinrichtung beseitigt werden. Die Funktion der Verbesserung der Empfangsqualität besteht vermutlich darin, dass Ionen, die den Hauptstrahl ungerichtet und mit verschiedenen Geschwindigkeiten begleiten, vor dem Gehäuse mit der Empfangsantenne auf eine magnetische Kreisbahn um das Loch gezwungen und durch Wirbelströme abgebremst werden. Je nach Polarität der Magnete handelt es sich dabei um Kationen (Südpol-Südpol) oder Anionen (Nordpol-Nordpol). Durch das aufgebrachte Zinn auf dem Kupfer bildet sich Zinnoxid. Dies bewirkt durch den amphoterischen Katalysatoreffekt eine Rekombination der Ionen zu O₂ oder N₂.

Die Rekombination wird stärker, wenn anstelle von verzinntem Kupfer beidseitig oxidiertes Aluminium verwendet wird. Für die Rekombination eignet sich auch Aluminiumoxid.

Gemäss einer bevorzugten Ausbildung wird die Messqualität des Messsignals und damit die Genauigkeit der Messung der Material-Detektoreinrichtung erheblich genauer, wenn die Kupfer- oder Aluminiumschicht senkrecht zur Antennenfläche mindestens eine Breite von 15,5 mm aufweist.

Eine weitere Verbesserung tritt dann ein, wenn die Magnete mindestens eine Durchgangsbohrung aufweisen, die besonders bevorzugt zentrisch zu dem Magnetfeldraum angeordnet ist. Die Anordnung derartiger Magnete an der vorgegebenen Stelle bewirken weniger Störungseinflüsse auf die Messung und ergeben schärfere akustische Signale, die schneller die genaue Ortung des gesuchten Objekts begünstigen.

Die Vorsatzeinrichtung zur Verbesserung der Empfangsqualität kann vorteilhafterweise eine Magnethalterung aufweisen, die aus einer Halteplatte besteht, die sich senkrecht zu der Antennenfläche erstreckt, aus einem nicht magnetisierbaren Material besteht und den Magneten außen und/oder innen zumindest an einem freien Ende aufnimmt. Gemäss einer anderen Ausbildung kann die Magnethalterung als Rohr ausgebildet sein, das sich ebenfalls senkrecht zu der Antennenfläche erstreckt und aus einem nicht magnetisierbaren Material besteht. Auch hier können die Magnete außen und/oder innen aufgebracht sein. Da handelsübliche Magnete mit einem Kunststoff umgeben sind (sogenannte Plastferrite), die eine Abmessung aufweisen, die größer ist, als die seitliche Begrenzung des Magnetfeldraums durch die Magnete mindestens erfordert, können die Plastferrite seitlich an das Gehäuse der Material-Detektoreinrichtung entsprechend einfach angeklebt oder mittels eines Klettbandes lösbar befestigt werden und sich mit dem für die gewünschte Anwendung wirksamen Bereich der Magnete somit seitlich der Antennenfläche und senkrecht zu dieser erstrecken. Je nach Aufbau kann die Magnethalterung ein Halteelement aufweisen, das einerseits die Magnethalterung trägt und andererseits geeignet ist, die Magnethalterung an dem Gehäuse lösbar zu fixieren. Damit kann die Magnethalterung bei der Messung schnell an dem jeweiligen Gerät befestigt und genauso schnell gelöst werden, wenn bei anderen Messungen die Anordnung eines derartigen Bereiches vor der Antennenfläche nicht erforderlich ist. Bei der rohrförmigen Ausführung kann auch eine Quadrupolmagnetanordnung gewählt werden.

Die erfindungsgemäße Vorsatzeinrichtung kann an der Material-Detektoreinrichtung derart fest fixiert sein, dass die Magnethalterung an der die Antennenfläche bildenden Wand des Gehäuses oder die Magnete direkt, wie oben beschrieben seitlich, fest fixiert ist. Die Fixierung kann beispielsweise durch Kleben der Magnethalterung an die die Antennenfläche aufweisende Seitenwand des Gehäuses, oder durch Anbringen an einer die Seitenwand des Gehäuses bildenden Wand, erfolgen.

Die lösbare Fixierung der Magnethalterung an dem Gehäuse erfolgt vorteilhafterweise über ein Halteelement, das entsprechend geeignete lösbare Rastmittel aufweist, die in entsprechende Vorrichtungen am Gehäuse eingreifen und zum Lösen entweder von Hand oder mittels eines Werkzeuges entriegelt werden können. Es ist auch möglich die Magnethalterungen an den Wänden des Gehäuses anzuordnen, die sich senkrecht zu der Antennenfläche erstrecken. Hierzu weist zweckmäßigerweise die Magnethalterung Halteplatten auf, die an diesen Wänden durch Kleben als feste Verbindung oder durch Schrauben oder Klettbänder als lösbare Verbindung befestigt sind uns sich somit seitlich der Antennenfläche und senkrecht zu dieser erstrecken.

Weitere Merkmale der Erfindung ergeben sich aus der folgenden Beschreibung der Ausführungsbeispiele in Verbindung mit den Ansprüchen und den begleitenden Zeichnungen. Die einzelnen Merkmale können je für sich oder zu mehreren bei Ausführungsformen der Erfindung verwirklicht sein. Es stellen dar:
- Figur 1: die perspektivische Ansicht einer erfindungsgemäßen Vorsatzeinrichtung zur Verbesserung der Empfangsqualität zur lösbaren Fixierung an einem entsprechenden Gehäuse mit seitlichen Magnethalterungen;
- Figur 2: die perspektivische Ansicht einer Vorsatzeinrichtung zur Verbesserung der Empfiangsqualität zur lösbaren Fixierung an einem Gehäuse mit einer rohrförmigen Magnethalterung;
- Figur 3: die perspektivische Ansicht einer Vorsatzeinrichtung zur Verbesserung der Empfangsqualität mit einer rohrförmigen Magnethalterung zur festen Verbindung mit einem Gehäuse; und
- Figur 4: zwei verschiedene Gehäuseformen mit daran befestigten Vorsatzeinrichtungen zur Verbesserung der Empfiangsqualität; und
- Figur 5: die perspektivische Ansicht (Figur 5a) einer Halteplatte als Magnethalterung mit aufgeklebtem Magnet und eine Schnittdarstellung (Figur 5b).

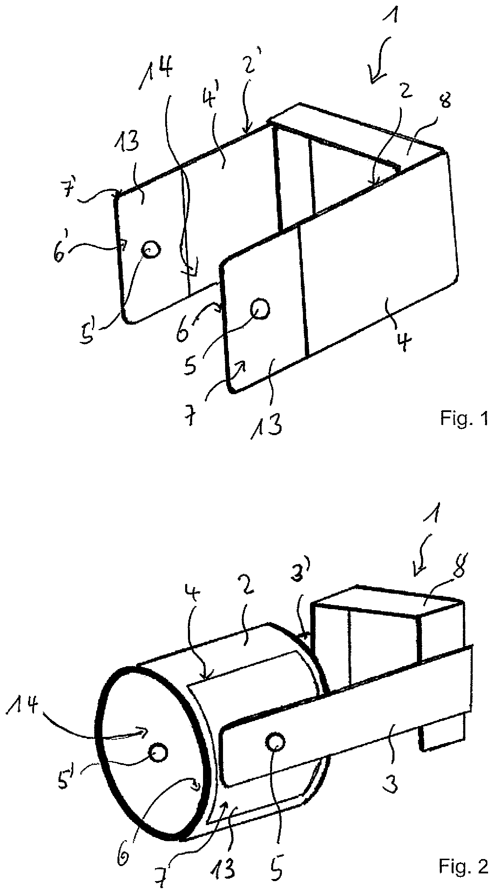

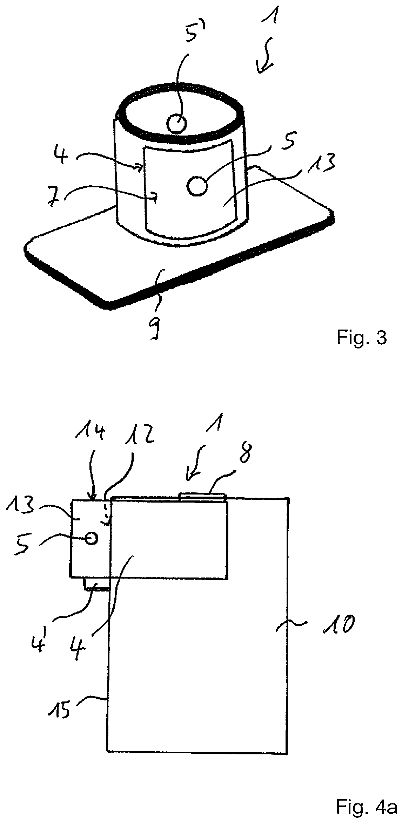

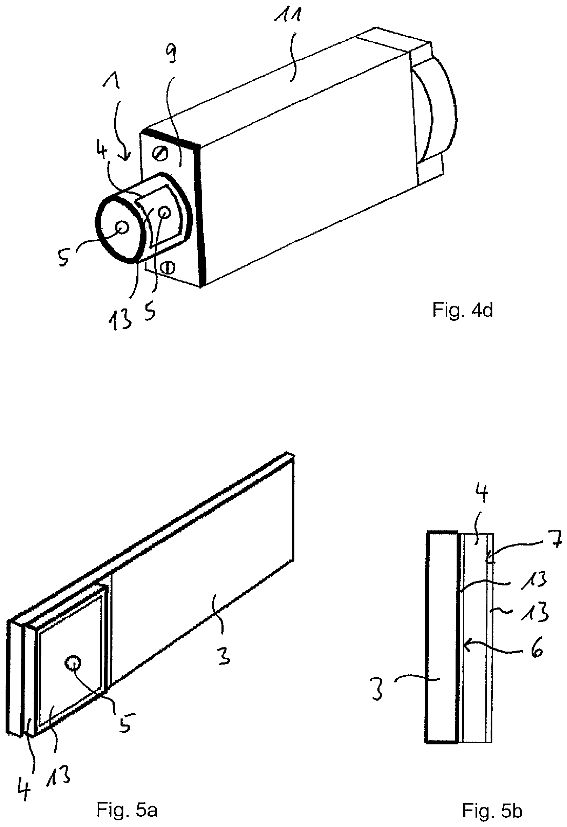

Figur 1 zeigt ein Ausführungsbeispiel mit einer Vorsatzeinrichtung 1 zur Verbesserung der Empfangsqualität mit zwei längliche Plastmagneten 4, 4', die an ihren freien Enden auf einer Breite von 15,5 mm sowohl auf der Südpolseite 6, 6' als auch auf der Nordpolseite 7, 7' eine aufgeklebte verzinnte Kupferfolie 13 aufweisen. Die Plastmagneten 4, 4' weisen üblicherweise eine Größe von 58x31 oder 31x15,5 mm je nach Anwendungsfall auf. Die Magnete 4, 4' sind mit der Südpolseite 6, 6' auf des sich die Kupferfolie 13 befindet einander zugewandt und weisen eine Durchgangsbohrung 5, 5' auf, die von der innenliegenden Kupferfolie 13 der Südpolseite 6, 6' zu der außenliegenden Kupferfolie 13 der Nordpolseite 7, 7' führt. Am anderen Ende sind die Magnete 4, 4' über ein Halteelement 8 verbunden, mittels dem die gesamte Vorsatzeinrichtung 1 an einem Gehäuse 10 (siehe Figur 4a) fixierbar ist. In diesem Fall dienen die länglichen Magnete 4, 4' selbst als eine Magnethalterung 2, 2', denn der wirksame Bereich ist im Bereich der Kupferfolie 13 mit dem Magnetfeldraum 14 zwischen den Magnethalterungen 2, 2'. An Stelle der länglichen Magnete 4, 4' ist es gemäss Figur 5 auch möglich jeweils eine Halteplatte 3 als Magnethalterung 2 zu verwenden, die nur an ihrem freien Ende einen Magnet 4, 4' mit der jeweiligen Kupferfolie 13 aufweist. Die Magnete 4, 4' mit der Kupferfolie 13 sind mit der Südpolseite 6, 6' auf die jeweilige Halteplatte 3 außen aufgeklebt. Figur 5a und 5b zeigt nur eine Halteplatte 3 mit Magnet 4; entsprechend gibt es dazu eine nicht dargestellte Halteplatte für die andere Seite, ähnlich wie in Figur 1. Die Halteplatte 3 ist aus einem nicht magnetisierbaren Material, wie beispielsweise Aluminium oder Chromstahl. Der Durchmesser der Bohrungen beträgt vorzugsweise 3 bis 5 mm und die magnetische Feldstärke der Magnete 10 mT ± 2 mT.

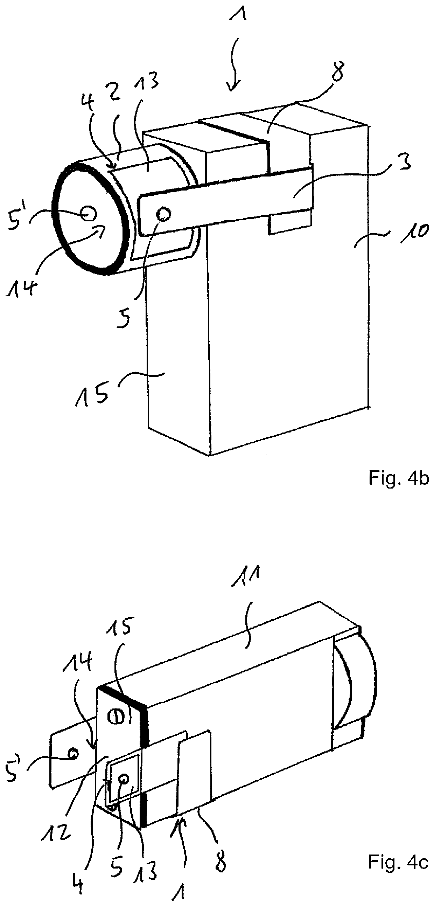

Figur 2 zeigt eine Vorsatzeinrichtung 1 zur Verbesserung der Empfangsqualität mit einer rohrförmigen Magnethalterung 2, die über Halteplatten 3, 3' aus einem nicht magnetisierbaren Material mit dem Haltelement 8 verbunden ist. Die rohrförmige Magnethalterung 2 weist ebenfalls Durchgangsbohrungen 5 auf. An der Magnethalterung 2 sind entsprechend Magnete 4, 4' mit verzinnter Kupferfolie 13 mit ihrer Südpolseite 6 nach innen gerichtet angeordnet. Bei diesem Ausführungsbeispiel sind die Magnete (4, 4') außen angebracht. Sichtbar ist bei dieser Abbildung lediglich die äußere Kupferfolie 13 der Nordpolseite (7 in Figur 1). Die Magnete (4, 4' ähnlich Figur 1) sind beidseitig mit Kupferfolie beklebt und auf die Halterung 2 aufgeklebt. Die Vorsatzeinrichtung 1 kann mittels des Halteelements 8 an einem Gehäuse 10, wie in Figur 4b dargestellt, lösbar fixiert werden.

Figur 3 zeigt die Vorsatzeinrichtung zur Verbesserung der Empfangsqualität mit einer rohrförmigen Magnethalterung 2, die an einer Seitenwand 15 eines Gehäuses befestigbar ist (siehe Figur 4d). Hierzu ist die Magnethalterung 2 an der Platte 9 angeklebt, die an das Gehäuse anschraubbar ist und mit der Platte 9 die Seitenwand 15 bildet.

Figur 4a bis d zeigt verschiedene quaderförmige Gehäuse 10, 11 von Material-Detektoreinrichtungen mit daran angebrachten Vorsatzeinrichtungen 1 zur Verbesserung der Empfangsqualität vor der Antennenfläche 12. Die Figuren 4a und 4b zeigen jeweils das gleiche Gehäuse 10 mit der Vorsatzeinrichtung 1 gemäss Figur 1 und Figur 2. In den Figuren 4c und 4d ist ein anderes Gehäuse 11 dargestellt, bei dem in der Figur 4c eine Vorsatzeinrichtung zur Verbesserung der Empfangsqualität mit einer Magnethalterung 2 gemäss Figur 5a und 5b und in Figur 4d mit einer Vorsatzeinrichtung 1 gemäss Figur 3 dargestellt ist. Die Vorsatzeinrichtung 1 in Figur 4c weist die Magnethalterung 2 mit Halteplatten 3, 3' aus nicht magnetisierbarem Material auf, auf der außen die Magnete 4,4' mit der verzinnten Kupferfolie 13 aufgeklebt sind. In den Figuren 4a bis 4d bilden die Magnete 4, 4' einen Magnetfeldraum 14 direkt vor der Antennenfläche 12 an der Seitenwand 15.

Grundsätzlich ist es auch möglich, die lösbaren Vorsatzeinrichtungen zur Verbesserung der Empfangsqualität anstelle des Halteelements 8 mittels Klettbänder über die Halteplatten 3, 3' oder die Magnete 4, 4', wie im Zusammenhang mit Figur 1 beschrieben, an den jeweiligen Gehäusen 10, 11 zu befestigen.

Wesentlich ist, dass der in den Figuren 1 bis 4 angedeutete Magnetfeldraum 14 zwischen den Magneten 4, 4' mit der verzinnten Kupferfolie 13 oder an deren Stelle mit einer oxidierten Aluminiumfolie auf jeder Polseite 6, 6', 7, 7' vor der Antennenfläche 12 jedes Gehäuses 10, 11 gebildet wird. Optimale Ergebnisse sind mit einem Magnetfeldraum zu erreichen, der sich mindestens über eine Länge von 15, 5 mm an der Antennenfläche 12 beginnend und sich von dieser senkrecht wegerstreckt.

Bei den Ausführungsbeispielen sind die Magnete 4, 4' derart angeordnet, das die Südpolflächen 6, 6' einander zugewandt sind. Dies basiert darauf, das diese Vorsatzeinrichtungen auf eine Material-Detektoreinrichtung angepasst sind, die gemäss dem eingangs genannten Patent ausgebildet und hergestellt ist. Die Material-Detektoreinrichtung hat einen Antennenaufbau, der die Anordnung der Südpolflächen 6, 6', wie in den Ausführungsbeispielen angegeben, erforderlich macht. Die Material-Detektoreinrichtung könnte gemäss dem genannten Patent auch mit einer anders ausgestalteten Antenne versehen werden, so dass eine erfindungsgemäße Vorsatzeinrichtung 1 mit einander zugewandten Nordpolflächen 7, 7' in entsprechender Ausführung zu einer Verbesserung der Empfangsqualität führen würde. Allerdings ist eine Material-Detektoreinrichtung, wie sie bei den Ausführungsbeispielen vorausgesetzt wurde, leistungsfähiger als eine Material-Detektoranordnung mit einer anders ausgestalteten Antenne, bei der die Vorsatzeinrichtung 1 zu einer Verbesserung der Empfangsqualität führen würde. Damit ist auch eine Material-Detektoreinrichtung mit der Vorsatzeinrichtung 1 zur Verbesserung der Empfangsqualität gemäss den Ausführungsbeispielen insgesamt leistungsfähiger.

Mit der erfindungsgemäß ausgestalteten Vorsatzeinrichtung zur Verbesserung der Empfangsqualität wird erreicht, dass die insbesondere akustisch aufgenommenen Signale schärfer, d.h. die Unterschiede besser hörbar sind und Störungen bei den bekannten eingangs zitierten Material-Detektoreinrichtungen vermieden werden.

## Patentansprüche

1. Vorsatzeinrichtung (1) für eine Material-Detektoreinrichtung mit einem Suchantennen-Polarisationsinstrument, wobei die Material-Detektoreinrichtung ein Gehäuse (10, 11) mit einer einer Detektionsrichtung zugeordneten Antennenfläche (12) aufweist mit dem die Vorsatzeinrichtung verbindbar ist, **gekennzeichnet durch** eine Halterung (2, 2'; 3, 3'; 9) mit zwei einander gegenüberliegend mit gleichen Polen einander zugewandt angeordneten Magneten (4, 4') mit einem Magnetfeldraum (14) zwischen den Magneten (4, 4'), deren Polflächen (6, 6'; 7, 7') von einer verzinnten Kupfer- oder oxidierten Aluminiumschicht (13) abgedeckt sind, wobei die Magnete (4, 4') und die Kupfer- bzw. Aluminiumschicht (13) mindestens eine Durchgangsbohrung (5, 5') aufweisen, die von einer Polfläche (6, 6') zu der anderen Polfläche (7, 7') führt, und die Magnete (4, 4') mittels der Halterung (2, 2'; 3, 3'; 9) an dem Gehäuse (10, 11) der Material-Detektoreinrichtung anordenbar sind, wobei sich die Magnete (4, 4') senkrecht zu der Antennenfläche (12) erstrecken und den Magnetfeldraum (14) vor der Antennenfläche (12) bilden.

2. Vorsatzeinrichtung nach Anspruch 1, **dadurch gekennzeichnet, dass** die eine Durchgangsbohrung (5, 5') zentrisch zum Magnetfeldraum (14) angeordnet ist.

3. Vorsatzeinrichtung nach Anspruch 1 oder 2, **dadurch gekennzeichnet, dass** die Kupfer- bzw. Aluminiumschicht (13) senkrecht zur Antennenfläche (12) mindestens eine Breite von 15,5 mm aufweist.

4. Vorsatzeinrichtung nach einem der vorangegangenen Ansprüche, **gekennzeichnet durch** eine Magnethalterung (2, 2') mit einer Halteplatte (3, 3') für jeden Magneten (4, 4'), die sich senkrecht zu der Antennenfläche (12) erstreckt, aus einem nicht magnetisierbaren Material besteht und den Magneten (4, 4') außen und/oder innen aufnimmt.

5. Vorsatzeinrichtung nach einem der vorangegangenen Ansprüche 1 bis 4, **gekennzeichnet durch** eine Magnethalterung (2, 2'), die als Rohr ausgebildet ist und die Magnete (4, 4') außen und/oder innen aufnimmt.

6. Vorsatzeinrichtung nach Anspruch 4 oder 5, **dadurch gekennzeichnet, dass** die Magnethalterung (2) über ein Halteelement (8) lösbar an dem Gehäuse (10, 11) fixierbar ist.

7. Vorsatzeinrichtung nach Anspruch 4 oder 5, **dadurch gekennzeichnet, dass** die Vorsatzeinrichtung (1) fest an dem Gehäuse (10, 11) fixiert ist.

## Claims

1. Attachment (1) for a material detector device having a search antenna polarization instrument, where the material detector device has a housing (10, 11) with an antenna surface (12) assigned to a detection direction and the attachment (1) can be connected to the housing (10, 11), **characterized by** a holder (2, 2', 3, 3', 9) comprising two magnets (4, 4') positioned opposite each other with like poles facing each other whose pole surfaces (6, 6', 7, 7') are covered by a tinned copper or oxidized aluminum layer (13), where the magnets (4, 4') and the copper or aluminum layer (13) have at least one through bore (5, 5'), that through bore (5, 5') extending from one pole surface (6, 6') to the other pole surface (7, 7'), and the magnets (4, 4') can be positioned on the housing (10, 11) of the material detector device by means of the holder (2, 2', 3, 3', 9), wherein the magnets (4, 4') extend perpendicular to the antenna surface (12) and form a magnetic field space (14) in front of the antenna surface (12).

2. Attachment according to Claim 1, **characterized in that** the one through bore (5, 5') is centered with respect to the magnetic field space (14).

3. Attachment according to Claim 1 or 2, **characterized in that** the copper or aluminum layer (13) has a width of at least 15,5 mm perpendicular to the antenna surface (12).

4. Attachment according to any one of the preceding claims, **characterized by** a magnet holder (2, 2') having a retaining plate (3, 3') for each magnet (4, 4'), which extends perpendicular to the antenna surface (12), is made of a non-magnetizable material and accommodates the magnet (4, 4') outside and/or inside.

5. Attachment according to any one of the preceding claims, **characterized by** a magnet holder (2, 2') which is in the form of a pipe and accommodates the magnets (4, 4') outside and/or inside.

6. Attachment according to Claim 4 or 5, **characterized in that** the magnet holder (2) may be secured to the housing (10, 11) separably by means of a holding element (8).

7. Attachment according to Claim 4 or 5, **characterized in that** the attachment (1) is firmly secured to the housing (10, 11).

## Revendications

1. Embout frontal (1) destiné à un appareil de détection matérielle équipé d'un instrument de polarisation à antenne chercheuse, ledit appareil de détection matérielle comportant un boîtier (10, 11) qui est muni d'une surface (12) formant antenne, assignée à une direction de détection, et auquel ledit embout frontal peut être relié, **caractérisé par** un support (2, 2' ; 3, 3' ; 9) présentant deux aimants (4, 4') placés en vis-à-vis mutuel et tournés l'un vers l'autre par des pôles identiques, un espace (14) à champ magnétique étant réservé entre lesdits aimants (4, 4') dont les surfaces polaires (6, 6' ; 7, 7') sont recouvertes d'une couche (13) en cuivre étamé ou en aluminium oxydé, les aimants (4, 4'), et la couche respective (13) en cuivre ou en aluminium, étant percés d'au moins un trou de passage (5, 5') partant d'une surface polaire (6, 6') et gagnant l'autre surface polaire (7, 7'), et lesdits aimants (4, 4') pouvant être mis en place, au moyen du support (2, 2' ; 3, 3' ; 9), sur le boîtier (10, 11) de l'appareil de détection matérielle, sachant que lesdits aimants (4, 4') s'étendent perpendiculairement à la surface (12) formant antenne, et constituent l'espace (14) à champ magnétique devant ladite surface (12) formant antenne.

2. Embout frontal selon la revendication 1, **caractérisé par le fait que** le trou de passage (5, 5'), à présence minimale, occupe une position centrée vis-à-vis de l'espace (14) à champ magnétique.

3. Embout frontal selon la revendication 1 ou 2, **caractérisé par le fait que** la couche respective (13), en cuivre ou en aluminium, présente au moins une largeur de 15,5 mm perpendiculairement à la surface (12) formant antenne.

4. Embout frontal selon l'une des revendications précédentes, **caractérisé par** un support (2, 2') d'aimants muni, pour chaque aimant (4, 4'), d'une platine de maintien (3, 3') qui s'étend perpendiculairement à la surface (12) formant antenne, consiste en un matériau non magnétisable et reçoit ledit aimant (4, 4') extérieurement et/ou intérieurement.

5. Embout frontal selon l'une des revendications précédentes 1 à 4, **caractérisé par** un support (2, 2') d'aimants, réalisé sous la forme d'un tube et recevant lesdits aimants (4, 4') extérieurement et/ou intérieurement.

6. Embout frontal selon la revendication 4 ou 5, **caractérisé par le fait que** le support (2) des aimants peut être consigné amoviblement à demeure sur le boîtier (10, 11) par l'intermédiaire d'un élément de retenue (8).

7. Embout frontal selon la revendication 4 ou 5, **caractérisé par le fait que** ledit embout frontal (1) est bloqué rigidement à demeure sur le boîtier (10, 11).
